# EUROPEAN PATENT APPLICATION

(11) **EP 2 416 485 A2**
(43) Date of publication of application: **08.02.2012**
(21) Application number: 11176251.4
(22) Date of filing: 02.08.2011
(51) Int. Cl.: H02M 7/00

(54) **Inverter device**

(30) Priority: 03.08.2010 JP 2010174557
(71) Applicant: Fuji Electric Holdings Co., Ltd., Kawasaki-shi, Kanagawa 210-9530 (JP)
(72) Inventor: Hatozaki, Yoshihisa, Kawasaki-shi, 210-9530 (JP); Nakai, Masaru, Kawasaki-shi, 210-9530 (JP)
(74) Representative: Appelt, Christian W.

(57) **Abstract**

To improve the layout of main circuit parts of an inverter device, and the structure of the wiring between the parts, thereby accomplishing space saving for a substrate on which the circuit parts are mounted. In an inverter device in which an electromagnetic contactor, fuses, and input CTs are disposed between a semiconductor module and input terminal block disposed at upper and lower end portions of a substrate, and the parts are interconnected by a bus bar, with the electromagnetic contactor disposed with primary side terminals and secondary side terminals thereof facing the input terminal block and semiconductor module respectively, and the fuses and input CTs serially connected and arranged in parallel to the sides of the electromagnetic contactor, an R-phase and T-phase passing through the fuses and input CTs are such that the power source input terminals and the secondary side terminals of the electromagnetic contactor are connected by bus bars 7R-1 and 7T-1, and the primary side terminals of the electromagnetic contactor and the fuses are connected by bus bars 7R-2 and 7T-2, thus reducing the intervals between the electromagnetic contactor and the fuses, and accomplishing a space saving for the substrate.

## Description

### BACKGROUND OF THE INVENTION

### 1. Technical Field

The present invention relates to a general-purpose inverter device with a built-in electromagnetic contactor applied to, for example, elevator equipment, and in particular, relates to a wiring structure of main circuit parts mounted on a substrate in a housing of the inverter device.

### 2. Related Art

As is commonly known, the previously mentioned general-purpose inverter device is configured of an assembly structure wherein main circuit parts including a power source input terminal block and a main circuit semiconductor module are mounted on a sheet metal substrate installed in a housing of the inverter device, and the parts are interconnected by a bus bar (for example, refer to JP-A-2007-312545).

Also, depending on the type of inverter device, there is also known a general-purpose inverter device wherein an electromagnetic contactor connected to the primary side of the main circuit is incorporated so as to disconnect the input of the main circuit when the inverter is stopped by an alarm, and furthermore, a fuse and input CT (current detector) are also added (for example, refer to JP-A-9-56169).

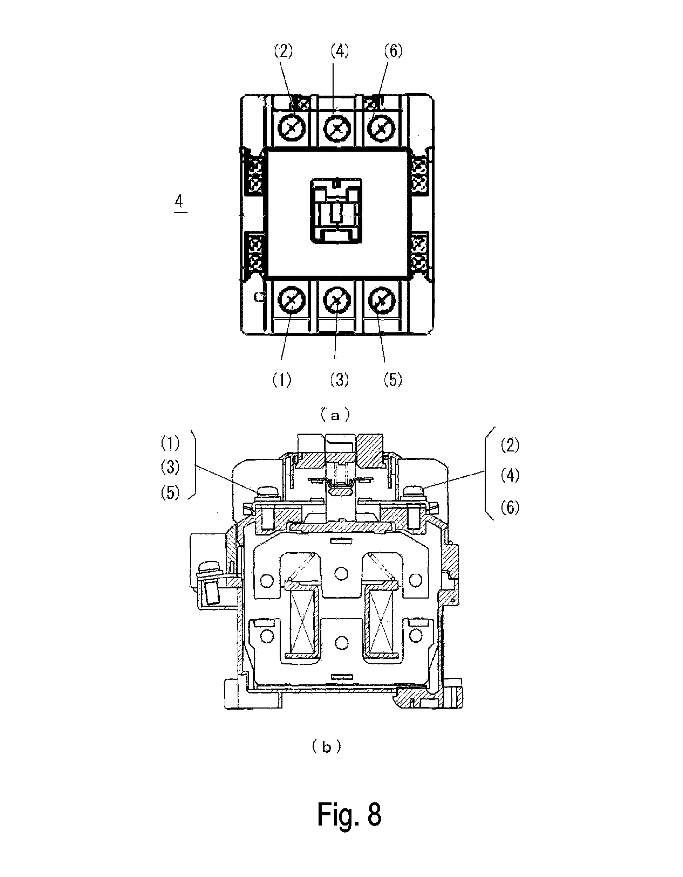

Figs. 8A and 8B are configuration diagrams of an electromagnetic contactor (for a three phase circuit) mounted in the inverter device, wherein primary side terminals (1), (3), and (5) and secondary side terminals (2), (4), and (6) (the numbers represent the terminal numbers) of a main circuit are included at either end of a housing across a contact mechanism. As a detailed structure and action of the electromagnetic contactor are commonly known, a description thereof will be omitted here.

The previously described inverter device with the built-in electromagnetic contactor has a large number of parts due to each of the electromagnetic contactor, fuse, and input CT being added to the input side of the main circuit, and it is desirable in terms of design that the inverter device is configured small and compactly by disposing the layout of the parts and bus bar wiring on the substrate as space efficiently as possible.

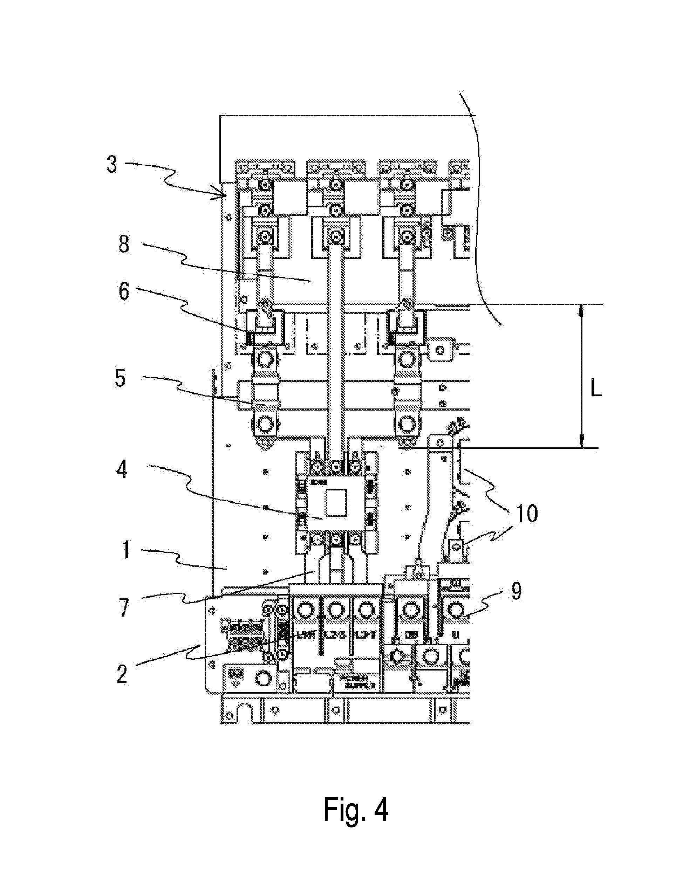

Next, with regard to the layout of the parts and the wiring structure, Comparison Example 1 and Comparison Example 2 examined by the inventor, and the like, at the design stage are shown in Figs. 4 and 5 and Figs. 6 and 7 respectively. In each drawing, reference numeral 1 is a sheet metal substrate, 2 is a power source input terminal block, 3 is a semiconductor module configuring a main circuit converter portion and inverter portion, 4 is an electromagnetic contactor connected to the input side of the semiconductor module 3, 5 is a fuse, 6 is an input CT, 7 is a bus bar (a copper cross-bar) that connects parts, 8 is a laminated bus bar that forms a circuit substrate of the semiconductor module 3, 9 is an output terminal block, and 10 is a smoothing capacitor connected to the main circuit.

### Comparison Example 1

In Comparison Example 1 shown in Figs. 4 and 5, the semiconductor module 3 and input terminal block 2 are disposed divided between the upper and lower end portions of the substrate 1, and the electromagnetic contactor 4, fuse 5, and input CT 6 are disposed arranged in an up-down direction in a region between the semiconductor module 3 and input terminal block 2, as shown in the drawings. Also, the electromagnetic contactor 4 is disposed vertically with primary side terminals thereof (refer to Figs. 8A and 8B) facing the input terminal block 2, and secondary side terminals facing the semiconductor module 3.

Then, the fuse 5 and input CT 6 are interposed in an R-phase and a T-phase, of R, S, and T-phases of a three phase power source, and serially connected between the secondary side terminals of the electromagnetic contactor 4 and the semiconductor module 3 via the bus bar 7, the S-phase is connected between the secondary side terminal of the electromagnetic contactor 4 and the semiconductor module 3, and the primary side terminals of the electromagnetic contactor 4 are connected to each of the R, S, and T-phase terminals of the input terminal block 2 via the bus bar 7.

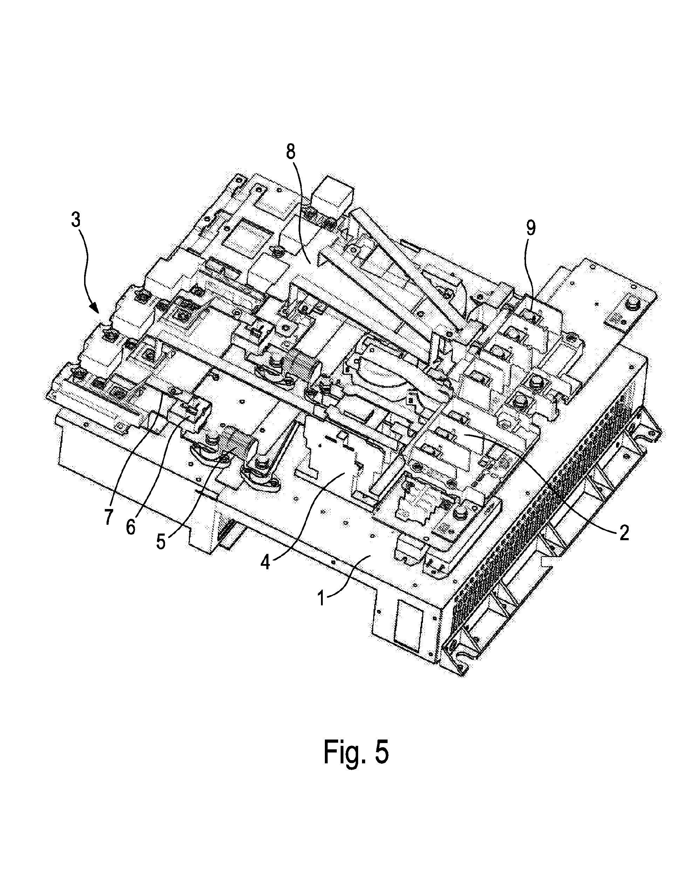

However, with the configuration of Figs. 4 and 5, as the serially connected body (length L) of the fuse 5 and input CT 6 is disposed between the electromagnetic contactor 4 and semiconductor module 3, the space efficiency of the substrate 1 is low, and with the configuration as it is, the necessary height dimension of the substrate 1 increases, and the size of the inverter device increases.

### Comparison Example 2

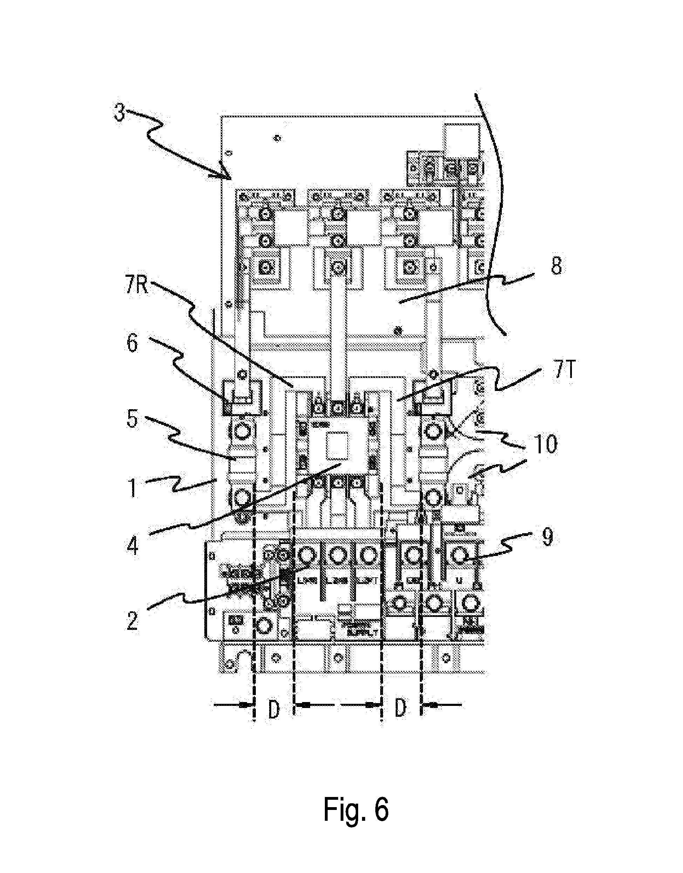

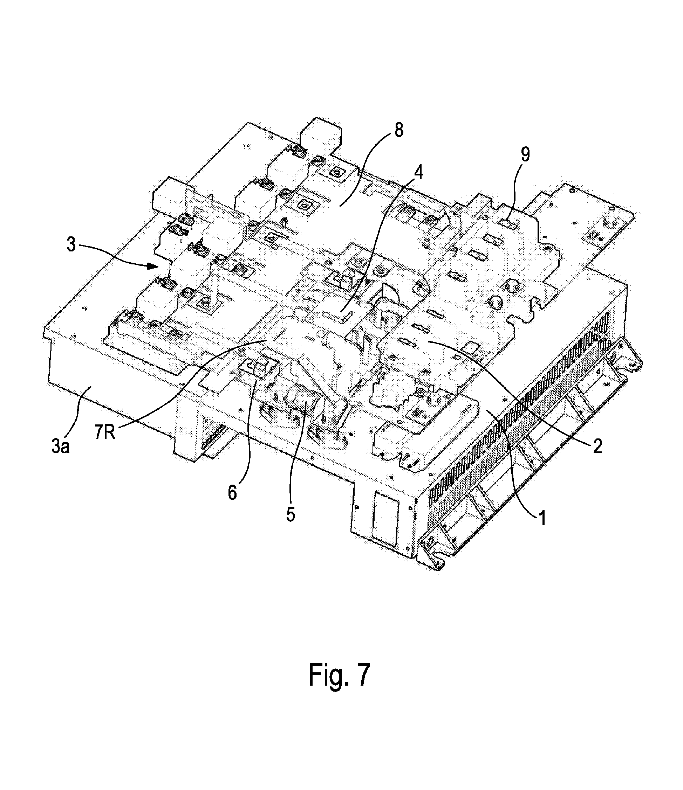

Meanwhile, in Comparison Example 2 shown in Figs. 6 and 7, with the fuses 5 and input CTs 6 interposed in the R-phase and T-phase serially connected and disposed in empty spaces to the sides of the electromagnetic contactor 4, the secondary side terminals of the electromagnetic contactor 4 and the fuses 5 are connected by bus bars 7R and 7T bent into an S-shape. Because of this, the necessary height dimension of the substrate 1 can be reduced in comparison with Comparison Example 1 of Figs. 4 and 5. However, when focusing on the wiring path of the bus bar 7, as the bus bars 7R and 7T connecting the secondary side terminals of the electromagnetic contactor 4 and the terminals (lower side) of the fuses 5 are bent into an S-shape, intervals D maintained between the electromagnetic contactor 4 and the fuses 5 and input CTs 6 disposed to the sides of the electromagnetic contactor 4, including the insulation distance (spatial distance), increase, because of which the necessary horizontal width dimension of the substrate 1 increases.

### SUMMARY OF THE INVENTION

Therefore, the invention has an object of providing an inverter device wherein the layout of main circuit parts, and the structure of the wiring between the parts, are improved so that space saving can be accomplished for a substrate, based on the results of examining Comparison Example 1 and Comparison Example 2.

In order to achieve the object, according to an aspect of the invention, an inverter device includes an assembly structure wherein circuit parts including a power source input terminal block, a main circuit semiconductor module, an electromagnetic contactor connected to a primary side of the semiconductor module, fuses, and input CTs are mounted on a sheet metal substrate installed in a housing, and the parts are interconnected by bus bars, wherein the semiconductor module and power source input terminal block are disposed in the upper and lower end regions of the substrate, and the electromagnetic contactor, fuses, and input CTs are laid out in a region between the semiconductor module and power source input terminal block, and wherein, with the electromagnetic contactor disposed vertically with primary side terminals and secondary side terminals thereof facing connection terminals of the power source input terminal block and semiconductor module respectively, and the fuses and input CTs serially connected and arranged in parallel to the sides of the electromagnetic contactor, a wiring path of a phase passing through a fuse and input CT is such that the power source input terminal and the secondary side terminal of the electromagnetic contactor, and the primary side terminal of the electromagnetic contactor corresponding to the phase and the connected body of the fuse and input CT, are each connected by a bus bar (claim 1).

Also, the wiring path of a phase that does not pass through a fuse and input CT is such that the primary side terminal of the electromagnetic contactor and the power source input terminal, and the secondary side terminal of the electromagnetic contactor corresponding to the terminals and the semiconductor module, are each connected by a bus bar (claim 2).

According to the heretofore described configuration, it is possible to reduce the necessary height of the substrate to a minimal dimension, as in Comparison Example 2 (refer to Figs. 6 and 7) , by disposing the fuses and input CTs in parallel in spaces to the sides of the electromagnetic contactor. Furthermore, the wiring path from the input terminal block through the electromagnetic contactor of the phases in which the fuses and input CTs are interposed is such that, by the lower side terminals of the fuses being connected by bus bars to the primary side terminals of the electromagnetic contactor arranged in positions at approximately the same height, and the power source input terminals being connected to the secondary side terminals of the electromagnetic contactor correspondingly, a space saving is accomplished for the substrate by reducing the intervals (insulation spatial distances) between the electromagnetic contactor and the fuses arranged in parallel to the sides thereof to the minimal dimension, because of which it is possible to configure a small, compact inverter device.

### BRIEF DESCRIPTION OF THE DRAWINGS

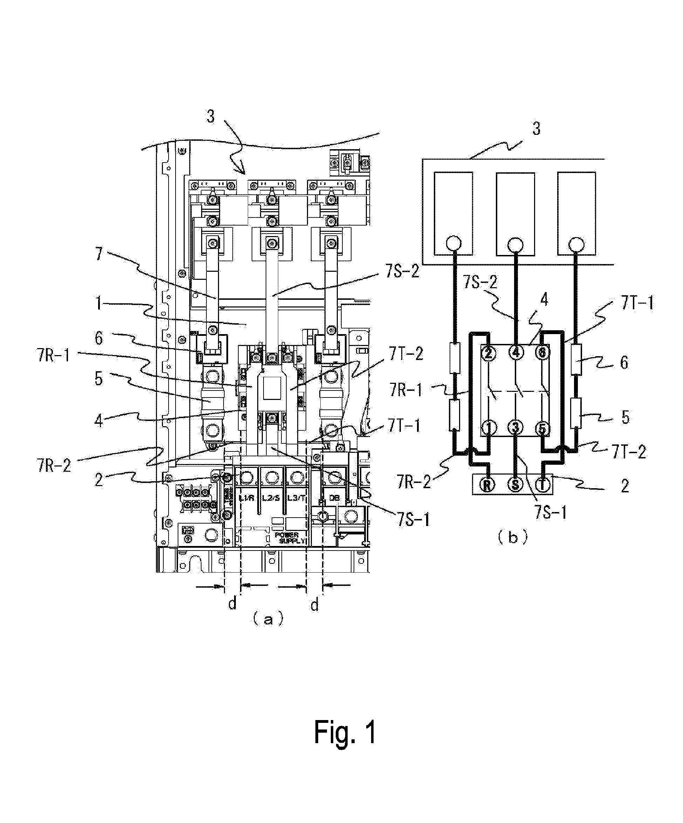

Figs. 1A and 1B are diagrams representing the disposition and wiring structure of input side main circuit parts of an inverter device according to a working example of the invention, wherein Fig. 1A is a plan view of a substrate, and Fig. 1B is a schematic view of a wiring path of Fig. 1A;

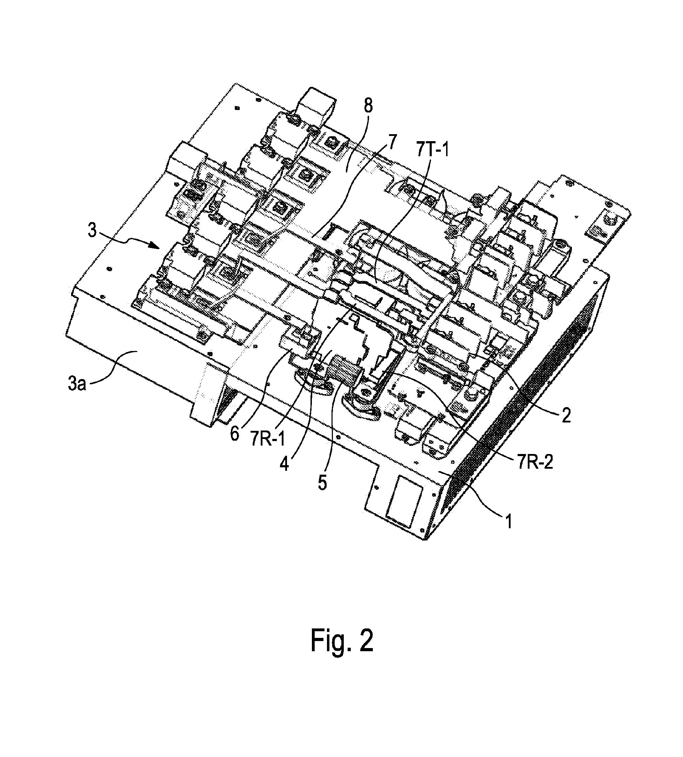

Fig. 2 is a 3D image corresponding to Fig. 1A;

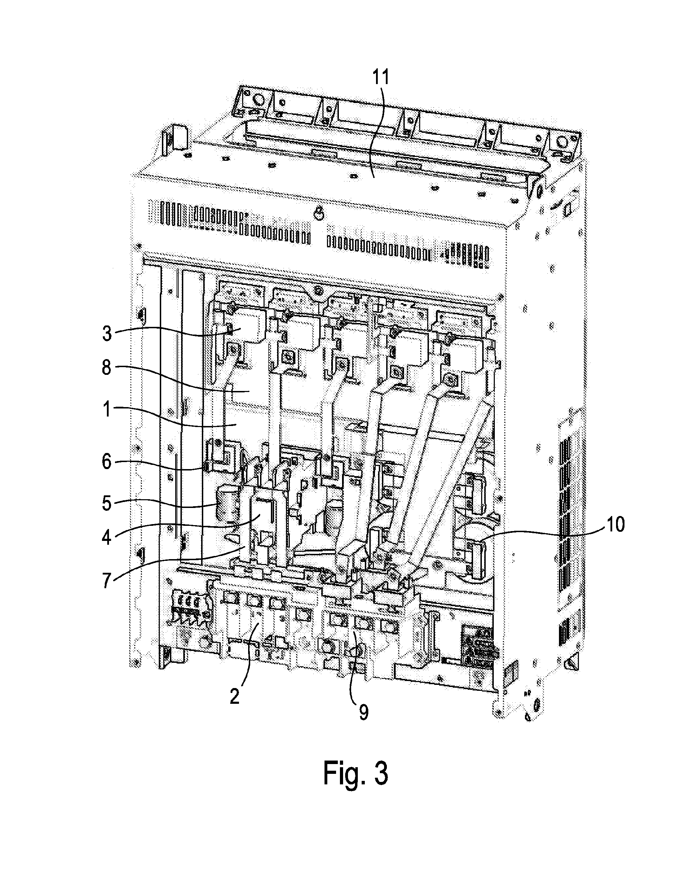

Fig. 3 is a 3D image of an inverter device wherein a main circuit assembly body of Figs. 1A, 1B, and 2 is installed in a housing;
Fig. 4 is a plan view of the disposition and wiring structure of main circuit parts shown as Comparison Example 1 corresponding to Fig. 1A;
Fig. 5 is a 3D image corresponding to Fig. 4;
Fig. 6 is a plan view of the disposition and wiring structure of main circuit parts shown as Comparison Example 2 corresponding to Fig. 1A;
Fig. 7 is a 3D image corresponding to Fig. 6; and
Figs. 8A and 8B are configuration diagrams of an electromagnetic contactor connected to the input side of a main circuit, wherein Fig. 8A is a plan view in which terminal symbols are attached, and Fig. 8B is a sectional view representing an internal structure.

### DESCRIPTION OF THE PREFERRED EMBODIMENT(S)

Hereafter, a description will be given of an embodiment of the invention, based on the working examples shown in Figs. 1A to 3. The same reference numerals and characters will be given to members in the working example drawings corresponding to Figs. 4 to 7, and a description thereof will be omitted.
The layout of a main circuit part shown in Figs. 1A, 1B, and 2 is basically such that series connected bodies of a fuse 5 and input CT 6 interposed in an R-phase and T-phase of an input power source are disposed in parallel across an electromagnetic contactor 4 to the left and right sides thereof, as in Comparison Example 2 shown in Figs. 6 and 7, but a wiring path of a bus bar that connects from an input terminal block 2 via the electromagnetic contactor 4 to the fuse 5 is formed as follows.

That is, with regard to the power source R-phase and T-phase in which the fuses 5 and input CTs 6 are interposed, bus bars 7R-1 and 7T-1 drawn out from R-phase and T-phase terminals of the input terminal block 2 bypass the front of the electromagnetic contactor 4 housing, and are connected to secondary side terminals (2) and (6) aligned on the upper side of the electromagnetic contactor 4 housing, and bus bars 7R-2 and 7T-2 connected to lower side terminals of the fuses 5 are connected respectively to primary side terminals (1) and (5) aligned on the lower side of the electromagnetic contactor 4 housing, which is the reverse of the previously mentioned Comparison Example 2. Meanwhile, with regard to an S-phase in which no fuse 5 or input CT 6 is interposed, an S-phase terminal of the input terminal block 2 and a primary side terminal (3) of the electromagnetic contactor 4, and a secondary side terminal (4) and a terminal of a semiconductor module 3, are connected via bus bars 7S-1 and 7S-2 respectively, as in Comparison Example 2.

According to the heretofore described wiring path, the bus bars 7R-2 and 7T-2 connecting the electromagnetic contactor 4 and fuses 5 can be wired in a horizontal direction maintaining a minimum necessary spatial distance d between the electromagnetic contactor 4 and fuse 5, without an S-shaped bus bar being drawn around an interval space D between the electromagnetic contactor 4 and fuse 5 as in Comparison Example 2 (refer to Figs. 6 and 7). Because of this, compared with Comparison Example 2, a further space saving is accomplished for a substrate 1, and it is possible to achieve a smaller, more compact inverter device.

Also, with the fuses 5 and input CTs 6 interposed in the R-phase and T-phase aligned in the input terminal block 2 and left and right ends of the electromagnetic contactor 4, and the phase in which no fuse 5 or input CT 6 is interposed allotted to the central S-phase, as in the working examples shown in the drawings, it is possible to wire the bus bar of each phase without crossing, maintaining a necessary interphase interval between the bus bars, by setting the connections of the bus bars to the primary side terminals and secondary side terminals of the electromagnetic contactor 4 to be the reverse of those in Comparison Example 2.

Fig. 3 is a three-dimensional image of a condition wherein the main circuit assembly of Figs. 1A, 1B, and 2 is installed in a housing 10 of an inverter device, and a surface cover of the housing is removed.

## Claims

1. An inverter device, comprising:
an assembly structure wherein circuit parts including a power source input terminal block, a main circuit semiconductor module, an electromagnetic contactor connected to a primary side of the semiconductor module, fuses, and input current detectors (input CTs ) are mounted on a sheet metal substrate installed in a housing, and the parts are interconnected by bus bars, wherein the semiconductor module and power source input terminal block are disposed divided between the upper and lower end regions of the substrate, and the electromagnetic contactor, fuses, and input current detectors (input CTs) are laid out in a region between the semiconductor module and power source input terminal block, wherein
with the electromagnetic contactor disposed vertically with primary side terminals and secondary side terminals thereof facing connection terminals of the power source input terminal block and semiconductor module respectively, and the fuses and input current detectors (input CTs) serially connected and arranged in parallel to the sides of the electromagnetic contactor, a wiring path of a phase passing through a fuse and input current detector (input CT) is such that the power source input terminal and the secondary side terminal of the electromagnetic contactor, and the primary side terminal of the electromagnetic contactor corresponding to the phase and the connected body of the fuse and input current detector (input CT), are each connected by a bus bar.

2. The inverter device according to claim 1, wherein the wiring path of a phase that does not pass through a fuse and input current detector (input CT) is such that the primary side terminal of the electromagnetic contactor and the power source input terminal, and the secondary side terminal of the electromagnetic contactor corresponding to the terminals and the semiconductor module, are each connected by a bus bar.
